Europäisches Patentamt

European Patent Office

Office européen des brevets

(19)

(11) Publication number: **0 138 594**
**A2**

(12)

# EUROPEAN PATENT APPLICATION

(21) Application number: **84306995.6**

(22) Date of filing: **12.10.84**

(51) Int. Cl.⁴: **C 09 K 7/02**

(30) Priority: **13.10.83 US 541522**

(43) Date of publication of application: **24.04.85**
**Bulletin 85/17**

(84) Designated Contracting States: **DE GB IT NL**

(71) Applicant: **Exxon Research and Engineering Company,**
**P.O.Box 390 180 Park Avenue, Florham Park New**
**Jersey 07932 (US)**

(72) Inventor: **Portnoy, Robert Charles, 7803 Westwind Court,**
**Houston Texas (US)**
Inventor: **Newlove, John Christopher, 3222 Lake Stream**
**Drive, Kingwood Texas (US)**
Inventor: **Lee, Young Ra, 10606 Chapel Hill Drive,**
**Houston Texas (US)**

(74) Representative: **Dew, Melvyn John et al, Esso Chemical**
**Ltd. Esso Chemical Research Centre P.O. Box 1,**
**Abingdon Oxfordshire, OX13 6BB (GB)**

(54) **Stabilization of aqueous clay-based drilling fluids.**

(57) Poly(acrylic acid) of molecular weight ranging from 2,500 to 5,000 and its salts is a superior dispersant and high temperature deflocculant for the stabilization fo the rheological properties of aqueous clay-based drilling fluids.

## STABILIZATION OF AQUEOUS CLAY-BASED DRILLING FLUIDS

This invention relates to dispersant additives for drilling muds. More particularly, it relates to an acrylic polymer useful as a thermal degradation reduction additive for aqueous drilling fluids used in the drilling of subterranean wells.

An important component of rotary drilling operations in the exploration for and production of subterranean resources is the drilling mud. Some of the most serious problems encountered in producing and maintaining effective clay-based aqueous drilling fluids are caused by the interaction of the mud with the earth formation being drilled. These interactions include contamination of the mud by formation fluids, incorporation into the mud of viscosity producing and inert drilled solids, chemical contamination by drilled solids, and heating of the mud by high temperature formations. These interactions generally cause extreme thickening of the muds and associated, costly drilling problems and delays.

The effect of high temperature on the mud is especially significant. Not only does heat itself cause flocculation of the mud, but it also increases the thickening effects of chemical contaminants such as calcium, chloride, and other species, and it deactivates or destroys many mud thinners used to stabilize muds to these effects. As drilling depth has increased, so has the bottom hole temperature. Therefore, a product is required which can protect the mud properties under the adverse conditions of today's hotter, deeper well bores.

It is known to use the ammonium and alkali metal salts of polymers of acrylic acid having an average molecular weight in excess of about 2,000 (generally desirably in the range of 5,000 to 50,000; preferably in the range of 15,000 to 35,000 - see col.5, line 69 through col.6 line 5 of U.S. Patent 2,552,775) as a protective additive for aqueous drilling muds used in shallow wells. Over the past several years various materials have been disclosed as high temperature water based mud deflocculants. Among these are a low molecular weight poly(acrylic acid) of $\bar{M}w$ not more than about 2500, and salts thereof (see U.S. Patent 3,764,530 - col.7, lines 27-28) and a low molecular weight sulfonated copolymer of styrene and maleic anhydride (see U.S. Patent 3,730,900). The latter has achieved considerable acceptance by the drilling mud industry as an effective and valuable product which is known as Mil-Temp and sold by Milchem, Inc. of Houston, Texas.

In recent years Chesser et al. have suggested in the J. Pet. Tech. 950-956 (1980) that the poly(acrylic acid) is inferior to the Mil-Temp product as a high temperature rheological stabilizer of aqueous muds contaminated by calcium salts and/or containing high levels of clay solids.

It has been discovered that poly(acrylic acid) and its salts of about 3,500 weight average molecular weight ($\bar{M}w$) is a superior additive for the stabilization and deflocculation of aqueous clay-based drilling muds exposed to temperatures as high as 260$^{O}$C and above. These materials protect the rheological properties of clay-based muds to a surprising degree compared to other high temperature deflocculants when used either as the sole dispersant in the mud or in combination with other common thinners such as lignosulfonate. They are more effective in the presence of calcium salts and in difficult to control high clay solids muds.

In accordance with this invention there is provided an aqueous drilling fluid consisting essentially of a water base, a clayey material suspended in said water base, and from 0.25 to 12, preferably 0.5 to 8, grams per 350 ml, hereinafter designated (ppb), of an acrylic acid homopolymer or a salt thereof, said homopolymer having a weight average molecular weight ($\bar{M}w$) of from 2,500 to 5,000 whereby the rheological properties of said fluid has reduced thermal flocculation when exposed to a temperature of 205$^{O}$C for 16 hours.

The value of the discovery of the invention is apparent in the process of drilling a subterranean well wherein there is circulated in the borehole of said well an aqueous drilling fluid containing suspended clayey material exposed to an operational temperature of at least 175°C by the step of reducing the thermal flocculation of said fluid which comprises admixing with said fluid from 0.25 ppb to 12 ppb of an acrylic acid homopolymer or a salt thereof, said homopolymer having a weight average molecular weight of from 2,500 to 5,000 and circulating said fluid throughout said well.

Any acrylic acid polymer or alkali metal or ammonium salt thereof having a weight average molecular weight $\bar{M}w$ of from 2,500 to 5,000 may be utilized. Conventional polymerization techniques which will yield low molecular weight acrylic acid polymers or alkali metal or ammonium salts thereof may be utilized to prepare acrylic acid polymer. These techniques generally involve use of solvents, catalysts and chain transfer agents, or "stoppers" and are conducted at temperatures from about 20°C to 100°C. Such low molecular weight poly(acrylic acid) and its salts are generally commercially available.

The polymer may be used in its acidic form or an alkali metal or ammonium salt may be used. Polyacrylate salts of sodium, potassium, lithium and ammonia may be used.

The invention also incorporates a process for reducing flocculation of aqueous drilling fluids induced or exacerbated by high temperature conditions. In the field of subterranean well drilling, temperatures in excess of 175°C are considered to represent high temperature conditions. Thus, the process of the invention appears quite useful when the aqueous drilling fluid of the invention is subjected to said high temperature operational conditions, e.g. from 175°C to 260°C and higher.

The amount of acrylic polymer or alkali metal or ammonium salt thereof utilized will vary with the particular drilling environment at hand. Formation characteristics, borehole properties, drilling depth, contaminants, temperatures and pressures encountered, and drilling fluid weight will influence the determination of quantities of acrylic material to be utilized in order to achieve the desired effect. In addition, the particular properties of the selected acrylic polymer will also influence the determination of quantities needed in the process. Because of this it is impossible to specifically state nominal usage levels under all environments. Those skilled in the art of drilling will be able to easily determine needed ratios by testing samples obtained from the borehole; checking formation characteristics, temperatures, and pressures; and by otherwise determining the rheological properties that will be required. Nevertheless, it can be stated that, under most high temperature drilling conditions, about 2 ppb (grams per 350 ml) treatment should be sufficient. It is possible under some circumstances to utilize concentrations as low as 0.25 ppb or as high as 12 ppb. The polymer may be added to the drilling fluid as a pretreatment or may be added in predetermined quantities to the drilling fluid and thereafter circulated with the fluid in the well bore The polymer is readily adaptable to all drilling environments, being effective in fresh water, salt solutions, and in brines. A variety of drilling fluid additives may be utilized in the drilling fluid treated for reduction of thermal flocculation with the acrylic polymer. For example, lignosulfonates, starch, bentonite, barite, lignite, quebracho, carboxymethylcellulose, and other commonly utilized additives may form the drilling fluid to which is additionally added for prevention of thermal degradation the present polymer. Generally speaking, the drilling fluid of the present invention will have an aqueous base and will have clayey material suspended therein.

The following examples will further illustrate the present invention.

EXAMPLE 1

In this example are demonstrated the superior

rheological properties of a simple clay and water drilling fluid treated with a representative polymer of this invention as compared to a similar drilling fluid having no deflocculant treatment.

A number of aliquots of simple drilling fluid were mixed at one time by the addition of 22.5g of bentonite to 350g of water for each aliquot of drilling fluid required. The clay was added slowly to the stirred fluid and agitation was continued for at least 16 hours to obtain maximum viscosity yield from the clay.

Three 350ml aliquots of this slurry were chemically treated as shown in Table 1. The chemical treatment was mixed with each fluid and the pH was adjusted to 8.5-9.0 with 20% caustic soda solution. The fluids were aged with rolling at $66^{\circ}C$ for 16 hours (Baroid Model 704 Roller Oven, N.L. Baroid, Houston, Texas), the pH of each fluid was readjusted to 8.5-9.0, and the rheological properties of each were measured (Fann Model 35A Viscometer, Fann Instrument Operations, Dresser/Magcabar, Houston, Texas) at $25^{\circ}C$. The remaining quantity of each sample was then sealed in Baroid High Temperature Aging Cells (Model 760, N.L. Baroid, Houston, Texas) under 500 psig of nitrogen gas and rolled for 16 hours at $205^{\circ}C$. After readjustment of the pH of each sample to 8.5-9.0, rheological measurements were again made at $25^{\circ}C$.

The data compiled in Table 1 from this test clearly show the ability of a poly(acrylic acid) as described by this invention to deflocculate simple drilling fluids treated at temperatures up to $205^{\circ}C$.

TABLE 1

| Example No. | Treatment | Rate PPB [1] | Conditioning Temperature °C | Plastic Viscosity CPS | Yield Point Pa | Gel Strengths | |
|---|---|---|---|---|---|---|---|
| | | | | | | 10 sec | 10 min |
| 1A | – | – | 66 | 31 | 12.5 | 5 | 13 |
| 1B | PAA[2] | 1 | 66 | 21 | 2.4 | 5 | 5 |
| 1C | PAA[2] | 2 | 66 | 17 | 4.8 | 7 | 8 |
| 1D | – | – | 150,400 | --[3] | --[3] | 58 | 70 |
| 1E | PAA[2] | 1 | 150,400 | 29 | 5.3 | 5 | 7 |
| 1F | PAA[2] | 2 | 150,400 | 19 | 8.2 | 6 | 6 |

[1]Rate of chemical application based on advertised active ingredient concentration. PPB means grams per 350 mililiters.

[2]Percol E5, a poly(acrylic acid) of 3,500 weight average molecular weight. 25% active ingredient sold by Allied Colloids, Suffolk, Va.

[3]Fann 35 Viscometer readings at 600 and/or 300 were off scale. Data could not be calculated.

EXAMPLE 2

In this example is shown the superior resistance of aqueous drilling muds to upset of rheological properties caused by contamination by calcium sulfate and high temperature aging when treated with an acrylic acid polymer of this invention as compared to similar drilling fluids having either no special deflocculant treatment or treatment with Mil-Temp (Mil Chem, Inc., Houston, Texas) a well known commercially available deflocculant for high temperature service. The level of calcium ion contamination added to each sample in this test was 10,000 mg/l.

A number of aliquots of a chrome lignosulfonate dispersed drilling fluid were prepared by adding 4.0g of chrome lignosulfonate per each 350 ml of simple clay slurry (prepared as in Example 1) required for the test. The pH of the lignosulfonate treated mud was adjusted to 10.5 with caustic soda solution, and then the slurry was agitated for at least 16 hours more.

Three 350 ml aliquots of this mud were chemically treated as shown in Table 2. First 15.5g of gypsum were mixed with the fluid and then the deflocculant treatment was added. The pH was readjusted to 10.5. Each sample was then sealed in a Baroid High Temperature Aging Cell under 3,448 kPa of nitrogen gas and aged at 205°C for 16 hours with rolling as in Example 1. After readjustment of the pH of each sample to 10.5, rheological measurements were made at 25°C as in the preceding example. This procedure was carried out for three dispersant treatment levels 2, 4 and 8 grams per 350 ml sample.

TABLE 2

| Example No. | Treatment | Rate PPB (1) | Plastic Viscosity CPS | Yield Point Pa (2) | Gel Strengths 10 sec | Gel Strengths 10 min |
|---|---|---|---|---|---|---|
| 2A | - | - | -(4) | -(4) | 82 | 145 |
| 2B | PAA(2) | 2 | 68 | 19.2 | 3 | 27 |
| 2C | Mil-Temp(3) | 2 | 47 | 28.8 | 20 | 100 |
| 2D | - | - | -(4) | -(4) | 140 | 192 |
| 2E | PAA(2) | 4 | 67 | 46.6 | 8 | 18 |
| 2F | Mil-Temp(3) | 4 | 76 | 56.2 | 9 | 77 |
| 2G | - | - | -(4) | -(4) | 185 | 300 |
| 2H | PAA(2) | 8 | 54 | 3.8 | 5 | 12 |
| 2I | Mil-Temp(3) | 8 | 63 | 34.6 | 9 | 28 |

(1)Rate of chemical application based on advertised active ingredient concentration.
(2)Percol E5, a poly(acrylic acid) of 3,500 weight average molecular weight. 25% active ingredient sold by Allied Colloids Co., Suffolk, Va.
(3)Neutralized sulfonated, low molecular weight copolymer of styrene and maleic anhydride sold by Mil Chem Inc., Houston, Texas.
(4)Fann 35 Viscometer readings at 600 and/or 300 RPM were off scale. Data could not be calculated.

EXAMPLE 3

This example shows the superior effectiveness of polymers of this invention as aqueous drilling fluid deflocculants for use at high temperatures in calcium as salt contaminated high solids muds as compared to Mil-Temp (Mil Chem, Inc., Houston, Texas) a sulfonated styrenemaleic anhydride copolymer and to a lower molecular weight acrylic acid polymer.

The drilling fluid used in this example was a complex laboratory prepared mud mixed according to the principles taught in Examples 1 and 2 containing:

| | |
|---|---|
| water, | to volume; |
| clays | |
| bentonite, | 12.8 ppb (grams per 350 ml) |
| calcium montmorillonite, | 10.0 ppb |
| kaolinite | 10.0 ppb; |
| conventional dispersants | |
| lignosulfonate, | 2.9 ppb |
| lignite, | 1.45 ppb |
| contaminants | |
| sodium chloride, | 1.8 ppb |
| gypsum, | 0.18 ppb; |
| and weighting material | |
| barium sulfate | 362 ppb |

The pH of the slurry was adjusted to 10.0-10.5. The density was 0.37 ppb.

Ten aliquots (350 ml) of this mud were treated with dispersants as shown in Table 3. Each dispersant portion was mixed with an aliquot of mud, the sample was aged at 66°C and then 205°C as described in Example 1 with readjustment to pH 10.0-10.5 after each step. Rheology measurements were then made at 25°C.

The results given in Table 3 verify that the inventive PAA is a potent stabilizer of the rheological properties of complex, contaminated, dense drilling muds particularly as compared to Dispex N40 and Mil-Temp.

TABLE 3

| Sample No. | Treatment | Rate PPB[1] | Plastic Viscosity CPS | Yield Point Pa [2] | Gel Strengths 10 sec | 10 min |
|---|---|---|---|---|---|---|
| 3A | - | - | 50 | 14.4 | 5 | 197 |
| 3B | Dispex N-40[2] | 2 | 59 | 6.2 | 8 | 82 |
| 3C | Mil-Temp [3] | 2 | 73 | 13.0 | 5 | 164 |
| 3D | PAA [4] | 2 | 46 | 6.7 | 3 | 71 |
| 3E | Dispex N-40[2] | 4 | 52 | 34.1 | 48 | 81 |
| 3F | Mil-Temp [3] | 4 | 61 | 14.9 | 3 | 81 |
| 3G | PAA | 4 | 37 | 7.7 | 5 | 19 |
| 3H | Dispex N-40[2] | 8 | 38 | 49.9 | 76 | 105 |
| 3I | Mil-Temp [3] | 8 | 36 | 63.4 | 136 | 164 |
| 3J | PAA | 8 | 47 | 16.8 | 10 | 27 |

[1]Rate of chemical application based on advertised active ingredient concentration. PPB means grams per 350 mililiters.

[2]Sodium polyacrylate of 2,000 weight average molecular weight. Active ingredient about 31% as poly(acrylic acid). Applied on this basis. Sold by Allied Colloids, Co., Suffolk, Va.

[3]Neutralized sulfonated low molecular weight copolymer of styrene and maleic anhydride. Sold by Mil Chem Inc., Houston, Tx.

[4]Percol E-5a poly(acrylic acid) of 3,500 weight average molecular weight. 25% active ingredient. Sold by Allied Colloids Co., Suffolk, Va.

EXAMPLE 4

Tests were carried out on to compare the effects of the poly(acrylic acid) of the invention and Mil-Temp upon a mud containing large quantities of low density solids. The mud chosen as the substrate for this test was an actual field mud from a drilling operation in Mobile Bay, Alabama. The mud was a fresh water system containing less than 20 ppm calcium and less than 50 ppm chloride. Total solids were high at 12% by volume or 28% by weight which equals 120 grams solids per 350 ml of mud. Cation exchange capacity by methylene blue titration indicated 43.8 grams of bentonite equivalent clays per 350 ml of mud. Among the components of this mud were large quantities of chrome lignosulfonate, lignite and Resinex (Magcobar/Dresser, Houston, Texas) added for rheology and filtration control.

Three aliquots of this mud were treated variously with no additional high temperature deflocculant, 4 ppb of PAA, and 4 ppb of Mil-Temp, two products described in previous examples. The samples were aged at 150°F for 16 hours with rolling as in Example 1, and then each was subjected to a 16 hour viscosity profile analysis in a Fann 5STDL Consistometer (Fann Instrument Operations, Dresser/Magcabar, Houston, Texas).

Using this instrument the viscosity of a drilling fluid can be constantly monitored under the chosen conditions of temperature and pressure. For these tests conditions simulating the drilling of a deep, hot, well, 260°C and 103.4 MPa were used. The pressure was applied from the beginning of each test; heat-up of the system from ambient to 260°C required approximately the first 3/4 hours of each run; the temperature was held at 260°C for the remaining 15-1/4 hours in each case. Results were measured as "consistency" from 0-500 cps, a measurement correlated to Brookfield viscosity by calibration of the instrument with standard oil.

The results showed the superiority of PAA (the poly (acrylic acid) of the invention) over Mil-Temp as a deflocculant of high solids aqueous drilling fluids while at extreme temperatures at least as high as $260^{\circ}$C.

The test conditions of $260^{\circ}$C for 16 hours appear to readily flocculate the aqueous drilling fluids of the prior art and thus are appropriate to illustrate the resistance to thermally induced flocculation exhibited by the drilling fluids of this invention.

CLAIMS

1. An aqueous drilling fluid consisting essentially of a water base, a clayey material suspended in said water base, and from 0.25 grams per 350 ml (ppb) to 12 ppb of an acrylic acid homopolymer or a salt thereof, said homopolymer having a weight average molecular weight of from 2,500 to 5,000 whereby the rheological properties of said fluid has reduced thermal flocculation when exposed to a temperature of 205°C for 16 hours.

2. The aqueous drilling fluid of Claim 1 wherein said salt of the homopolymer is sodium polyacrylate.

3. The aqueous drilling fluid of Claim 1 or 2 wherein the said clayey material is bentonite.

4. In the process of drilling a subterranean well wherein there is circulated in the borehole of said well an aqueous drilling fluid containing suspended clayey material exposed to an operational temperature of at least 175°C, the step of reducing the thermal degradation of said fluid which comprises admixing with said fluid from 0.25 grams per 350 ml (ppb) to 12 ppb of an acrylic acid homopolymer or a salt thereof, said homopolymer having a weight average molecular weight of from 2,500 to 5,000 and circulating said fluid throughout said well.

5. The process of Claim 4 wherein the said salt of the homopolymer is sodium polyacrylate.

6. The use of an acrylic acid homopolymer having a weight average molecular weight of from 2500 to 5000, or a salt thereof, as a thermal flocculation reducing additive for aqueous clayey drilling fluids.